# EUROPÄISCHE PATENTANMELDUNG

(11) **EP 2 196 778 A2**
(43) Veröffentlichungstag der Anmeldung: **16.06.2010**
(21) Anmeldenummer: 09179312.5
(22) Anmeldetag: 15.12.2009
(51) Int. Cl.: G01D 21/00

(54) **Armatur**

(30) Priorität: 15.12.2008 DE 102008054684
(71) Anmelder: Keller, Friedhelm, 78166 Donaueschingen (DE)
(72) Erfinder: Keller, Friedhelm, 78166 Donaueschingen (DE)
(74) Vertreter: Hassa, Oliver Michael

(57) **Zusammenfassung**

Die vorliegende Erfindung schafft eine Armatur mit einem in der Armatur angeordneten Medium und einer Messeeinheit zur Bestimmung eines physikalischen Zustandes des Mediums, wobei wenigstens ein Sensor der Messeinheit an der Armatur angeordnet ist und die Messeinheit eine Auswerteeinheit zur Signalverarbeitung aufweist, an die wenigstens einer der Sensoren angeschlossen ist.

## Beschreibung

Die vorliegende Erfindung betrifft eine Armatur, insbesondere eine Armatur mit einer Mess- und Auswerteeinrichtung.

In der Fluidtechnik, Heiztechnik und Sanitärtechnik wird der Begriff Armatur unter anderem für Ventile verwendet, die dem Leiten, Steuern, Regeln und Messen von Gasen, Flüssigkeiten und Feststoffen (Schüttgut, wie z.B. Partikeln und Granulaten) insbesondere in Rohrleitungen dienen. Jede Armatur hat ihren Einsatzbereich nach dem in der Rohrleitung vorherrschenden Druck oder der Temperatur, nach der Größe der Rohrleitung, nach den Anforderungen der Dichtheit der Armatur, der Drosselung und der Richtung des Medienstromes, sowie des durch die Armatur strömenden Mediums. Die vorliegende Erfindung bezieht sich auf alle heute bekannten Bauformen von Armaturen. Diese unterscheiden sich im allgemeinen Rohrleitungsbau nach dem Konstruktionsprinzip des Regulierungsorgans in den Hauptgruppen als Ventil, Hahn, Schieber, Klappe und Membran-Armaturen.

In Armaturen ist je nach Anwendung der Einsatz verschiedenster Sensoren vorteilhaft. So werden z.B. in Sicherheitsarmaturen zur Begrenzung des Druckes in druckbelasteten Anlagen wie Kesseln oder Reaktoren Drucksensoren eingesetzt. Aus der DE 10 2004 027 330 A1 ist eine mit einem Sensor zur Volumenstrommessung versehene Armatur bekannt. Die durch den Sensor aufgenommenen Daten werden hierbei zur Auswertung an eine separate Rechnereinheit übertragen.

Zur Verarbeitung und Weiterleitung von Sensorsignalen werden unter anderem Transponder eingesetzt. Transponder sind Funk-Kommunikationsgeräte, die eingehende Signale aufnehmen und automatisch beantworten bzw. weiterleiten. Unter passiven Transpondern versteht man Systeme, die zur Kommunikation und zur Abarbeitung interner Prozesse benötigte Energie ausschließlich aus dem Feld der Schreib-/Leseeinheit beziehen. Passive Transponder arbeiten also eigenenergielos. Aktive Systeme verfügen dagegen über eine eigene Energieversorgung oft in Form einer Batterie. Dadurch sind mit aktiven Transpondern nicht nur größere Kommunikationsreichweiten möglich, auch die Verwaltung größerer Datenspeicher bzw. der Betrieb integrierter Sensorik wird realisierbar.

Im Bereich der Armaturen stellt die Integration von Sensoren ein Problem dar. Es müssen hierfür sowohl die Sensoren als auch die Informationsverarbeitungs- und übertragungssysteme mit Energie versorgt werden. Das Einbringen elektrischer Leitungen zur Realisierung der Energieversorgung und die konstruktive Realisierung stellt dabei eine kostenintensive Maßnahme dar. Ferner stellen Bohrungen insbesondere bei druckbeaufschlagten Anlagen, wie z.B. Kesseln unerwünschte Schwachstellen dar. Ferner müssen entsprechende Abdichtungen an den Durchtrittsstellen von Kabeln vorgenommen werden, um das Austreten von Medien zu verhindern. Gleiches gilt für die Übertragung der von den Sensoren ermittelten Messsignale aus der Armatur nach außen. So erfordert beispielsweise die in der DE 2821692 A1 beschriebene sanitäre Mischwasser-Armatur, die neben einem Thermostatventil ein digital arbeitendes Ventil, z.B. ein elektronisch gesteuertes Magnetventil aufweist, nach außen geführte Leitungen wenigstens für die elektrische Energieversorgung.

Die Verwendung passiver Transponder zur Informationsübertragung und Informationsverarbeitung hat den Nachteil, dass deren Kommunikationsreichweite gering ist und nicht alle Arten von Sensoren in geeigneter Weise mit Energie versorgt werden können.

Es ist daher eine Aufgabe der vorliegenden Erfindung eine Armatur mit integrierter Messsensorik und Signalauswertung zur Verfügung zu stellen. Es ist eine weitere Aufgabe der vorliegenden Erfindung eine Energiezuführung zu der Messssensorik und Signalauswertung und einen Signalaustausch mit der Signalauswertung bzw. Messsensorik zu ermöglichen, die eine Abdichtung der Armatur mit möglichst geringem Aufwand ermöglicht.

Erfindungsgemäß wird diese Aufgabe durch eine Armatur mit den Merkmalen des Patentanspruchs 1 gelöst.

Die der vorliegenden Erfindung zugrunde liegende Idee besteht darin, dass eine Armatur geschaffen wird, die mit einer Messeinheit versehen ist, wobei wenigstens ein Sensor der Messeinheit an einen inneren Medienraum der Armatur angrenzt und die Messeinheit eine Auswerteeinheit zur Signalverarbeitung aufweist, an die wenigstens einer der Sensoren angeschlossen ist.

Der Begriff Armatur wird im Sinne der Erfindung für Einrichtungen zum Leiten, steuern, regeln und messen von Gasen, Flüssigkeiten und Feststoffen (Schüttgut wie z.B. Partikel und Granulate) verwendet. Schwerpunktmäßig fallen unter den Begriff Armatur Ventile, die der Steuerung und Regelung von Medienströmungen in Rohrleitungen dienen. Im Sinne dieser Erfindung sollen neben Armaturen des allgemeinen Rohrleitungsbaus auch Armaturen aus den Bereichen der Medizin, Chemie, Pharmazeutik und Biologie verstanden werden.

In den Unteransprüchen finden sich vorteilhafte Ausgestaltungen und Verbesserungen der Erfindung.

Gemäß einer bevorzugten Weiterbildung der erfindungsgemäßen Armatur weist die Armatur ein Ventil auf und der Messeinheit ist ein Aktor des Ventils nachgeschaltet angeordnet, mittels dem die Mediendurchflussmenge, die Mediendurchflussgeschwindigkeit und/oder der vorherrschende Druck veränderbar ist. Bei der erfindungsgemäßen Armatur können gemäß dieser Ausführungsform Ventile mit unterschiedlicher Bauform zum Einsatz kommen. Wesentlich ist, dass das Ventil geeignet ist, den Ein- oder Auslass von Gasen, Flüssigkeiten und Pulvern zu kontrollieren, bzw. den Druck oder die Fließrichtung zu steuern und zu regeln. Das Ventil kann beispielsweise der Form nach ein Sitz- und Durchgangsventil, wie beispielsweise ein Kugelhahn, eine Klappe oder ein Schieber etc. sein. Ein- und Austritt liegen dabei in einer gemeinsamen Richtung, wobei der Durchgang "reduziert" (mit Querschnittsreduzierung oder ohne Querschnittsreduzierung) ausgeführt sein kann. Ebenso können Eckventile (Ein- und Austritt schneiden sich im rechten Winkel) oder Membran- und Schrägsitzventile (der Absperrkörper ist (meist) 45° zur Strömungsrichtung geneigt) verwendet werden. Bevorzugt kommen zwei und Drei-Wege-Ventile zum Einsatz, welche das besonders kontrollierte Mischen von Medienströmen erlauben, zum Einsatz.

Gemäß einer bevorzugten Weiterbildung der erfindungsgemäßen Armatur weist die Messeinheit einen Transponder zur drahtlosen Signalweitergabe auf. Der Transponder ist besonders bevorzugt ein aktiver Transponder und bevorzugt ein passiver Transponder. Durch das Vorsehen eines Transponders ist es möglich, Messsignale aus der Armatur weiterzuleiten, ohne dass ein Kabel aus der Armatur herausgeführt werden muss. Dadurch können ungewünschte Wanddurchbrüche in der Armatur vermieden werden.

Gemäß einer bevorzugten Weiterbildung der erfindungsgemäßen Armatur weist die Armatur einen Generator auf, der die Messeinheit mit Energie versorgt. Der Generator bietet den Vorteil, dass er die Messeinheit mit Energie versorgen kann. Eine Energieversorgungsleitung von außen in die Armatur ist dann nicht erforderlich. In Kombination mit dem Einsatz des Transponders ist so ein Aufbau für eine Armatur möglich, der weder eine Signalleitung noch eine Energiezuführleitung von außen in die Armatur erfordert. Dadurch kann die Armatur besonders gut gekapselt werden. Dies ist insbesondere bei Armaturen vorteilhaft, die unter hohem inneren Druck oder mit giftigen Medien betrieben werden. Prinzipiell kann jede Form von elektrischen Generatoren eingesetzt werden, welche Bewegungsenergie bzw. mechanische Energie in elektrische Energie wandeln. Der Generator kann beispielsweise ein Schaufelrad aufweisen, mittels dem er durch ein strömendes Medien angetrieben wird. Ebenso ist es möglich, einen Generator zu verwenden, der elektrische Energie berührungslos aus der kinetischen Energie erzeugt oder der thermische Energie aus dem vorbeiströmenden Medien oder aus der Energie der Strömungsreibung des Mediums verwendet.

Gemäß einer bevorzugten Weiterbildung der erfindungsgemäßen Armatur sind in der Messeinheit mehrere unterschiedliche Sensoren und/oder unterschiedlich positionierte und kombinierte Sensoren zusammengefasst. Beispielsweise können sehr gut Sensoren zur Bestimmung einer Fliessgeschwindigkeit des Mediums und/oder zur Bestimmung eines Drucks in Medien kombiniert werden, um den Strömungszustand sowie die Strömungsverhältnisse im Medium zu bestimmen. Im medizinischen Bereich können hier vorteilhaft mit einer solchen beispielsweise in das menschliche Adersystem eingeführten Armatur Messwerte über den Blutfluss im Adersystem und damit über den Kreislaufzustand gewonnen werden. Im Idealfall kann mittels der erfindungsgemäßen Armatur ein System realisiert werden, dass ohne Strom und Datenzuleitungen autonom im menschlichen Körper arbeitet und dabei die Daten über den Transponder nach außen abgibt. Bevorzugt weist die Messeinheit auch Sensoren zur Bestimmung einer Leitfähigkeit und/oder einer Viskosität und/oder einer Temperatur und/oder der Dichte und/oder eines Druckes des Mediums auf.

Gemäß einer bevorzugten Weiterbildung weist die Messeinheit Sensoren und/oder Mikrolabors zur Bestimmung einer chemischen Zusammensetzung des Mediums auf. Diese Ausführungsform ist besonders im Bereich des Einsatzes in der Chemie, Biologie, Pharmazie oder Medizin vorteilhaft. Dabei erlaubt die Armatur mittels des Sensors und/oder Mikrolabors eine Bestimmung von Stoffen in dem durch die Armatur strömenden Medien. Dabei kann in Abhängigkeit von einem ermittelten Stoff, das Ventil so gesteuert werden, dass zum Beispiel über die Durchflussmenge eine gewünschte Stoffzusammensetzung eingestellt wird.

Gemäß einer bevorzugten Weiterbildung ist der Sensor ein Atomabsorptionsspektrometriesensor. Die Atomabsorptionsspektrometrie (AAS) ist eine bewährte und schnelle Methode zur quantitativen Analyse und qualitativen Analyse von Elementen in Lösungen und Feststoffen. Bevorzugt ist der Atomabsorptionsspektrometriesensor ein Flammen-Atomabsorptionsspektrometriesensor (F-AAS), bevorzugt ein Atomabsorptionsspektrometriesensor mit elektrothermischer Aufheizung (GF-AAS) oder ein Atomabsorptionsspektrometriesensor mit Kontinuumstrahler und hochauflösendem Echelle-Doppelmonochromator (HR-CS AAS).

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Querschnittsansicht einer erfindungsgemäßen Armatur als Durchgangsventil ausgeführt gemäß einem ersten Ausführungsbeispiel;
- Fig. 2: eine schematische Querschnittsansicht eines Teilausschnittes einer erfindungsgemäßen Armatur gemäß einem zweiten Ausführungsbeispiel.

In den Figuren bezeichnen dieselben Bezugszeichen gleiche oder funktionsgleiche Komponenten, soweit nichts Gegenteiliges angegeben ist.

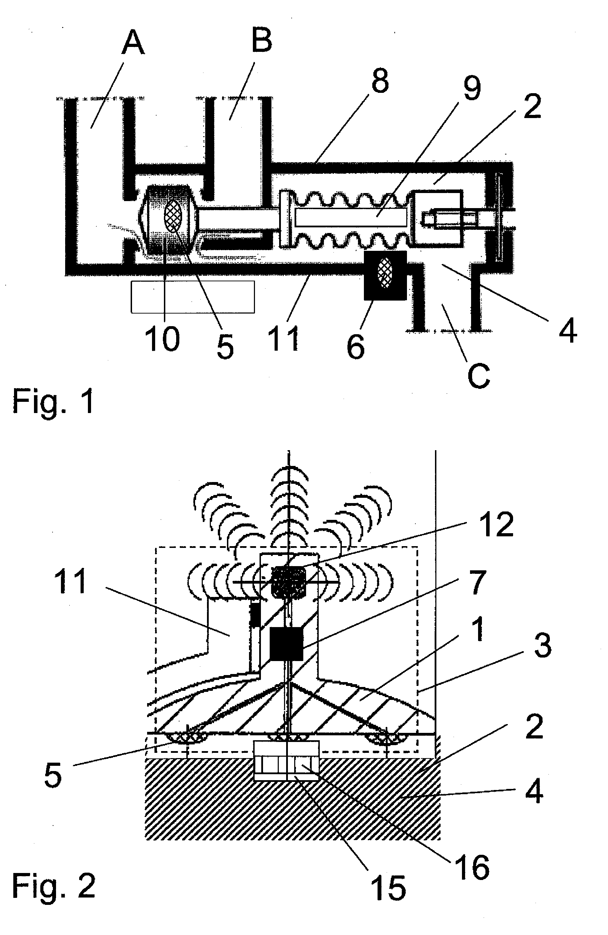

Fig. 1 zeigt eine schematische Querschnittsansicht einer erfindungsgemäßen Armatur als Durchgangsventil 8 aufgeführt gemäß einer ersten Ausführungsform. Das Ventil 8 weist einen Medienraum 2 zur Aufnahme eines Mediums 4 auf, der durch ein Außengehäuse 11 eingegrenzt wird. Ein Aktor 9 ist mit einem Regulierungsorgan 10 gekoppelt. Der Aktor 9 verschiebt im Betrieb das Regulierungsorgan 10 in dieser Darstellung von links nach rechts und zurück. Dadurch werden Strömungsquerschnitte im Ventil verändert, was eine Einstellung bzw. Regulierung einer durch das Ventil hindurch strömenden Durchflussmenge erlaubt. Ist das Regulierungsorgan 10 ganz nach links verfahren, ist der Durchfluss von einer ersten Leitung A zu einer dritten Leitung C blockiert, während die zweite Leitung B mit der dritten Leitung C verbunden ist. Ist das Regulierungsorgan 10 ganz nach rechts verfahren, kann das Medium 4 aus der ersten Leitung A in die dritte Leitung C strömen, während der Durchfluss von der zweiten Leitung B in die dritte Leitung C blockiert ist. Am Regulierungsorgan 10 ist ein Sensor 5 angeordnet. Zusätzlich ist am Außengehäuse 11 ein Sensor 6 angeordnet. Der Sensor 5 ist dabei so am Regulierungsorgan 10 angeordnet, dass er direkt an das Medium 4 angrenzt. Der Sensor 6 am Außengehäuse 11 ist in das Außengehäuse 11 integriert und grenzt somit nicht direkt an das Medium 4. Der Sensor 6 misst somit Eigenschaften des Mediums 4 durch das Material des Außengehäuses 11 hindurch.

Fig. 2 eine schematische Querschnittsansicht eines Teilausschnittes einer erfindungsgemäßen Armatur 1 gemäß einem zweiten Ausführungsbeispiel in einer Bauform als Kugelventil. Ein Regulierungsorgan 10 ist um seine vertikale Drehachse verdrehbar in einem Außengehäuse 11 angeordnet. In einem in der Armatur 1 angeordneten Medienraum 2 befindet sich ein Medium 4. Durch ein Verdrehen des Regulierungsorgans 10 wird ein Durchfluss des Mediums 4 durch das Außengehäuse 11 freigegeben oder gesperrt. Die Armatur 1 weist Sensoren 5 auf. Die Sensoren 5 sind mit einer Auswerteeinheit 7 verbunden. Die Auswerteeinheit 7 ist an einen Transponder 12 angeschlossen. Die Sensoren 5 bilden zusammen mit der Auswerteeinheit 7 und dem Transponder 12 eine Messeinheit 3. Die Messeinheit 3 ist von einer gestrichelten Linie umgeben dargestellt. Ein Generator 15, der ein Schaufelrad 16 aufweist ragt in das Medium 4 herein. Im Betrieb strömt das Medium 4 durch den Medienraum 2 und treibt dadurch das Schaufelrad 16 des Generators 15 an. Der Generator erzeugt elektromechanisch Energie und bildet so eine Energieversorgung für die Sensoren 5, die Auswerteeinheit 7 und den Transponder 12. Die Sensoren 5 nehmen Zustände des Mediums 4 auf und geben die Messsignale an die Auswerteeinheit 7 weiter. Die Auswerteeinheit 7 wertet die Informationen aus. Anschließend werden die ausgewerteten Informationen von dem Transponder 12, der mit der Auswerteeinheit 7 verbunden ist, berührungslos weitergegeben. Eine zusätzliche Öffnung in der Armatur zur Energiezuführung oder zum Herausführen der durch die Sensoren ermittelten Daten wird durch die erfindungsgemäße Armatur überflüssig.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Armatur
- 2: Medienraum
- 3: Messeinheit
- 4: Medium
- 5: Sensor am Regulierungsorgan
- 6: Sensor am Außengehäuse
- 7: Auswerteeinheit
- 8: Ventil
- 9: Aktor
- 10: Regulierungsorgan
- 11: Außengehäuse
- 12: Transponder
- 15: Generator
- 16: Schaufelrad
- A: erste Leitung
- B: zweite Leitung
- C: dritte Leitung

## Patentansprüche

1. Armatur (1) mit einem in der Armatur (1) angeordneten Medium (4) und einer Messeeinheit (3) zur Bestimmung eines physikalischen Zustandes des Mediums, wobei wenigstens ein Sensor (6) der Messeinheit (3) an der Armatur (1) angeordnet ist und die Messeinheit (3) eine Auswerteeinheit (7) zur Signalverarbeitung aufweist, an die wenigstens einer der Sensoren (6) angeschlossen ist.

2. Armatur (1) nach Anspruch 1,
**dadurch gekennzeichnet,**
**dass** die Armatur (1) ein Ventil (8) mit einem Außengehäuse (11) und einem relativ zum Außengehäuse (11) bewegbaren Regulierungsorgan (10), mittels dem die Mediendurchflussmenge und/oder die Mediendurchflussgeschwindigkeit und/oder der Mediendruck veränderbar ist, aufweist und dass der Messeinheit (3) ein Aktor (9) des Ventils (8) steuerbar nachgeschaltet angeordnet ist, der mit dem Regulierungsorgan (10) gekoppelt ist.

3. Armatur (1) nach Anspruch 1 oder Anspruch 2,
**dadurch gekennzeichnet,**
**dass** am Regulierungsorgan (10) Sensoren (5) angeordnet sind, die mit der Messeinheit (3) signaltechnisch verbunden sind.

4. Armatur (1) nach einem der vorhergehenden Ansprüche,
**dadurch gekennzeichnet,**
**dass** die Messeinheit (3) einen Transponder (12) zur drahtlosen Signalweitergabe aufweist.

5. Armatur (1) nach einem der vorhergehenden Ansprüche,
**dadurch gekennzeichnet,**
**dass** die Armatur (1) wenigstens einen Generator (15) aufweist, der die Messeinheit (3) und/oder den Aktor (9) mit Energie versorgt.

6. Armatur (1) nach Anspruch 5,
**dadurch gekennzeichnet,**
**dass** der Generator (15) ein Schaufelrad (16) aufweist mittels dem er durch ein durch den Medienraum (2) strömendes Medium (4) antreibbar ist.

7. Armatur (1) nach wenigstens einem der vorhergehenden Ansprüche,
**dadurch gekennzeichnet,**
**dass** in der Messeinheit (3) mehrere unterschiedliche Sensoren (5, 6) zusammengefasst sind.

8. Armatur (1) nach einem der vorhergehenden Ansprüche,
**dadurch gekennzeichnet,**
**dass** die Messeinheit (3) Sensoren (5) und oder Sensoren (6) zur Bestimmung einer Fließgeschwindigkeit und/oder einer Leitfähigkeit und/oder einer Viskosität und/oder der Dichte und/oder des Druckes und/oder der chem. Zusammensetzung und/oder einer Temperatur des Mediums (4) aufweist.

9. Armatur (1) nach Anspruch 8,
**dadurch gekennzeichnet,**
**dass** der Sensor (5) und/oder der Sensor (6) ein Atomabsorptionsspektrometriesensor ist.

10. Armatur (1) nach einem der vorhergehenden Ansprüche,
**dadurch gekennzeichnet,**
**dass** die Sensoren (5) und/oder die Sensoren (6) ohne direkten Kontakt mit dem Medium (4) angeordnet sind.
